# EUROPEAN PATENT SPECIFICATION

(11) **EP 2 789 546 B1**
(45) Date of publication and mention of the grant of the patent: **17.05.2017**
(21) Application number: 12855478.9
(22) Date of filing: 05.12.2012
(51) Int. Cl.: B65B 61/24, B65B 49/14, B65B 7/08

(54) **CHAIN LINK, CHAIN TYPE CONVEYOR, FILLING MACHINE, AND PACKAGE-FLAP FOLDING METHOD**
KETTENGLIED, KETTENFÖRDERER, FÜLLMASCHINE UND VERFAHREN ZUM FALTEN VON PAKETKLAPPEN
MAILLON DE CHAÎNE, BANDE TRANSPORTEUSE DE TYPE CHAÎNE, MACHINE DE REMPLISSAGE ET PROCÉDÉ DE PLIAGE DE RABATS D'EMBALLAGES

(30) Priority: 05.12.2011 CN 201110397843; 06.12.2011 CN 201110398829; 07.12.2011 CN 201110402326
(43) Date of publication of application: 15.10.2014
(73) Proprietor: Taizhou Zhuye Machinery Technology Co. Ltd., Taizhou, Zhejiang 318025 (CN)
(72) Inventor: ZHU, Shuanghai, Zhejiang 315801 (CN)
(74) Representative: Hocking, Adrian Niall
(86) International application number: PCT/CN2012/085931
(87) International publication number: WO 2013/083042

(56) References cited:
- EP-A1- 2 284 084
- EP-A2- 0 819 605
- CN-A- 1 203 879
- CN-A- 1 318 494
- CN-A- 1 318 494
- CN-A- 1 318 496
- CN-A- 101 112 919
- CN-A- 101 180 218
- CN-A- 102 490 936
- CN-A- 102 491 058
- CN-A- 102 491 058
- CN-A- 102 514 773
- CN-A- 102 514 773
- CN-U- 202 358 608
- CN-U- 202 642 186
- JP-A- H1 029 611
- JP-A- 2002 104 653

## Description

### Technical Filed

The present invention relates to a chain link for a chain conveyor, in particular to a chain link for a chain conveyor for conveying a package unit having an flap at the end and folding the flap at the end onto an end wall of the package to form a package.

The present invention also relates to a chain conveyor, in particular to a chain conveyor in form of an annular chain formed by a plurality of chain links hinged together.

The present invention also relates to a filling machine, in particular to a filling machine having a chain conveyor.

The present invention also relates to a package folding method, in particular to a method for folding a flap at a bottom end of the package.

### Background

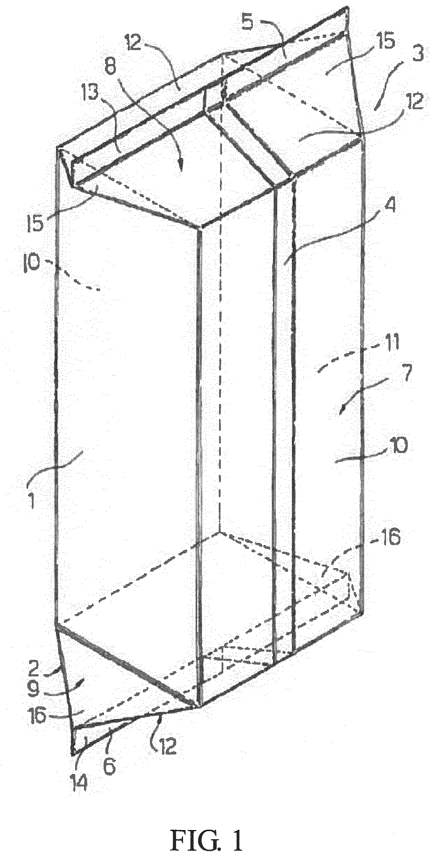

At present, there are many foods, such as milk, beverage and fruit juice and others, which may be filled into packages made of sterilized packaging material for sale. A typical example of such packages is a parallelepiped-shaped package formed by folding and sealing strip laminated packaging material. The package is manufactured by an automatic filling machine (also called packaging machine), and the strip packaging material are sterilized in the filling machine such as by applying chemical disinfectants, for example, hydrogen peroxide solution which is then removed after sterilization, for example, evaporated from the surface of the packaging material by heating. The sterilized packaging material are kept in a closed, sterilized environment, and folded longitudinally and sealed to form a vertical tube. The packaging material tube is then filled with food as an object to be packaged, sealed along a transversal part spaced equally and then cut along the transversal part into a plurality of pillowed packages 3 (as shown in FIG. 1). Then, the pillowed packages 3 are fed to a folding device where the pillowed packages 3 are mechanically folded to form corresponding packages, for example, substantially parallelepiped-shaped packages. A packaging machine having a package conveyor and folding device is disclosed in CN1318494 and EP0819605.

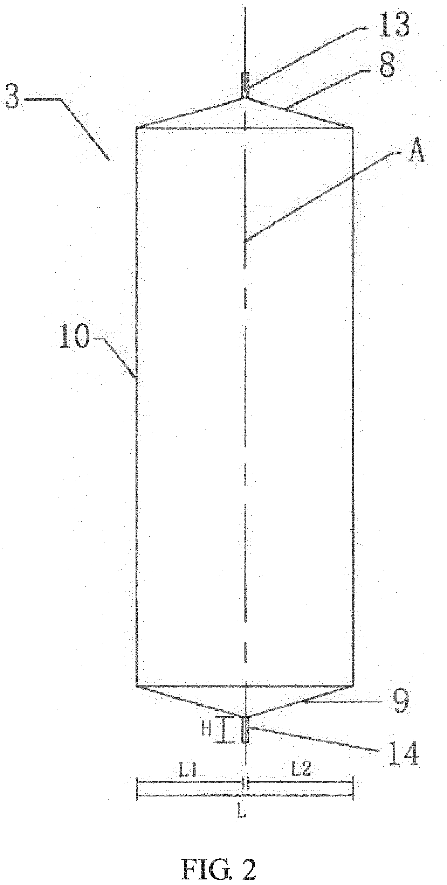

As shown in FIG. 1 and FIG. 2, the package 3 has a longitudinal sealing strip 4 extending along one side of each package 3, and the opposite end parts of the package are sealed by corresponding transverse sealing strips 5 and 6 which are perpendicular to and connected to the longitudinal strip 4. The package 3 has an axis parallel to the longitudinal sealing strip 4, and comprises a parallelepiped-shaped main part 7, and an opposite top end 8 and a bottom end 9 tapering towards the corresponding transverse sealing strips 5 and 6 from the main part 7, respectively. More specifically, the main part 7 of each package 3 is laterally limited by two planar rectangular walls 10 parallel to each other and also to the axis and two planar rectangular walls 11 extending vertically between the two planar rectangular walls 10. Each one of the end parts 8 and 9 is defined by a pair of substantially isosceles trapezoid walls 12. The pair of walls 12 slightly tilt facing each other with respect to a plane perpendicular to axis A, and have a rectangular edge defined by corresponding edges of the walls 10 of the main part 7 and a long edge connected by corresponding sealing strips 5 and 6. The longitudinal sealing strip 4 extends between the transverse sealing strips 5 and 6, and also extends along one of the whole planar rectangular walls 10 and a corresponding wall 12 on the same side with the planar rectangular walls 10. Each of the transverse sealing strips 5 and 6 forms corresponding rectangular flaps at the ends 13 and 14 which are substantially elongated, the flaps at the ends 13 and 14 are protruded from the corresponding package 3 along the direction of the axis A; and forms two substantially triangular folded wings 15 and 16, which are protruded laterally from opposite sides of the main part 7 and defined by ends of the corresponding wall 12. In order to form a packaging container, the opposite end parts 8 and 9 of the package 3 are pressed towards each other by the folding device downward, and the corresponding flaps at the ends 13 and 14 are folded onto the end parts 8 and 9.

Chinese Invention Patent No. CN100556760C disclosed a folding unit for a pourable food product packaging machine, as shown in FIG. 3 and FIG. 4, for manufacturing a pourable food product packaging container 2 from a sealed package 3, the packaging container 2 having a longitudinal axis A and at least one flap at the end 14 to be folded, the flap at the end 14 protruding in the direction of the aforementioned axis. The folding unit 1 has at least one conveying member 35 or 28 that passes through an end part opposite to the flap at the end 14, cyclically receives a corresponding package 3 in a feed direction C coaxial to the longitudinal axis A, and feeds the package 3 along a forming path B crisscross to the longitudinal axis A of the package 3; and a folding mechanism 24 that interacts with each package 3 along the forming path B in order to fold the corresponding flap at the end 14 onto the bottom end 9 of the package 3. The folding mechanism 24 comprises movable plates 42, each one of which has two pins 49 laterally protruding outward from the opposite sides of the movable plates 49. The movable plates 42 define a shock surface 43 that receives each package 3 through the end part opposite to the flap at the end 14. The shock surface 43 is borne by the conveying member 35 or 28 in order to move between a first running position where the shock surface 43 and the feed direction C of the corresponding package 3 form an angle of above 90° opening towards the forming path B direction, so that the relative flap at the end 14 is folded onto the package 3 in the traveling direction of the package along the forming path B according to the shock to the relative flap at the end 14, and a second running position where the shock surface 43 turns around towards the package 3 and cooperates with the package 3 to achieve the folding of the relative flap at the end 14 onto the package 3. The conveying member 35 of the folding unit belongs to a chain link for a chain conveyor. During feeding the package from the feed position to the output position, the shock surface of the folding mechanism on the conveying member 35 folds the flap at the end onto the end part. However, since the mechanism providing the folding mechanism on the conveying member is complex and the flap at the end is folded forward onto the end part, during the operation of forming the folded wings as the package runs forward, the folded flap at the end tends to interact with the folding device to be turned up to affect the subsequent operation, thus to affect the forming effect of the package.

### Summary of the Invention

The technical problem of the present invention to be solved is to provide a chain link for a chain conveyor. An annular chain, formed of chain links hinged, folds the flap at the end of the package backward onto the end part during the feeding of the package from the feeding position to the output position, to ensure that the flap at the end will not be turned up in the subsequent folding of the folded wings, in order to achieve smooth folding of the folded wings and realize good forming effect.

In order to solve the above technical problem, a first aspect of the present invention provides a chain link for a chain conveyor, comprising a hinge part for hinging and a support part fastened onto the hinge part for supporting the package. The support part is fastened with a blade for clamping and pushing the package. The blade divides the support part into a rectangular front support part and a rear support part. Multiple chain links are able to be hinged to form an annular chain, with the distance between the blades of two neighboring chain links in a straight line segment equaling to a width of the package L. The length of the support surface of the front support part L5 is slightly smaller than the distance between a flap at an end and a rear side surface of the package L1, after the package is fed from a C-shaped part of the annular chain, the flap at the end thereof can enter into a gap between two neighboring chain links. A rear end surface of the rear support part forms a guiding surface for guiding the flap at the end, during the movement through the chain link from the C-shaped part to a linear top branch of the annular chain, the flap at the end is blocked by the rear end surface of the rear support part of the previous chain link, the flap at the end is gradually withdrawn from the gap and is then folded backward onto a bottom end part of the package.

Comparing the chain link of the present invention with that in the prior art, as the length of the support surface of the front support part L5 is slightly smaller than the distance between the flap at the end and the rear side surface of the package L1, after the chain links form the annular chain and the package is fed from the provision platform, the package is supported by the blade of the next chain link and its flap at the end can enter into the gap between the chain links, and during the movement along with the chain link from the C-shaped part to the linear top branch, the blade of the next chain link pushes the package closer to the blade of the previous chain link, and the rear end surface of the rear support part forms a guiding surface for guiding the flap at the end to allow the withdrawing of the flap at the end from the gap and folding the flap at the end backward onto the end part. Therefore, the present invention does not require any additional members or devices. The folding of the flap at the end on the folding part can be accomplished just by the chain links themselves. The structure is simple.

The present invention further provides a chain conveyor, comprising the aforementioned chain link.

The present invention also provides a filling machine having the aforementioned chain conveyor.

The present invention also provides a method for folding a flap at the bottom end of the package, comprising an annular chain formed of multiple chain links hinged according to the first aspect of the present invention, the annular chain comprising the horizontal linear top branch and bottom branch and two bent C-shaped parts, the C-shaped parts being located at two end parts of the top branch and the bottom branch respectively, and the middle parts of the C-shaped parts defining a provision platform and an output platform respectively, the method comprising the following steps: A. the package having the flap at the end is fed from the provision platform, and the flap at the end is allowed to enter into the gap between two neighboring chain links; B. the annular chain is turned around, and the blade of the next chain link pushes the package to move towards the top branch, such that: C. a guiding member on the C-shaped part at the provision platform flattens a top end part of the package; and D. the rear end surface of the rear support part gradually guides the flap at the end, during the movement through the chain link from the C-shaped part to the linear top branch of the annular chain, the flap at the end is blocked by the rear end surface of the rear support part of the previous chain link, the flap at the end is gradually withdrawn from the gap and is then folded backward onto the bottom end part.

### Brief Description of the Invention

FIG. 1 is a three-dimensional schematic view of a package before folded.
FIG. 2 is a side schematic view of FIG. 1.

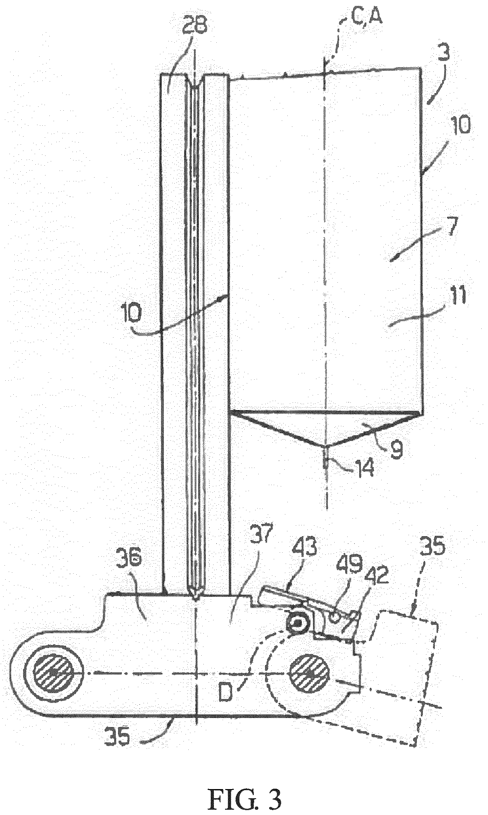

FIG. 3 is a schematic view of a chain link for a chain conveyor in the prior art.

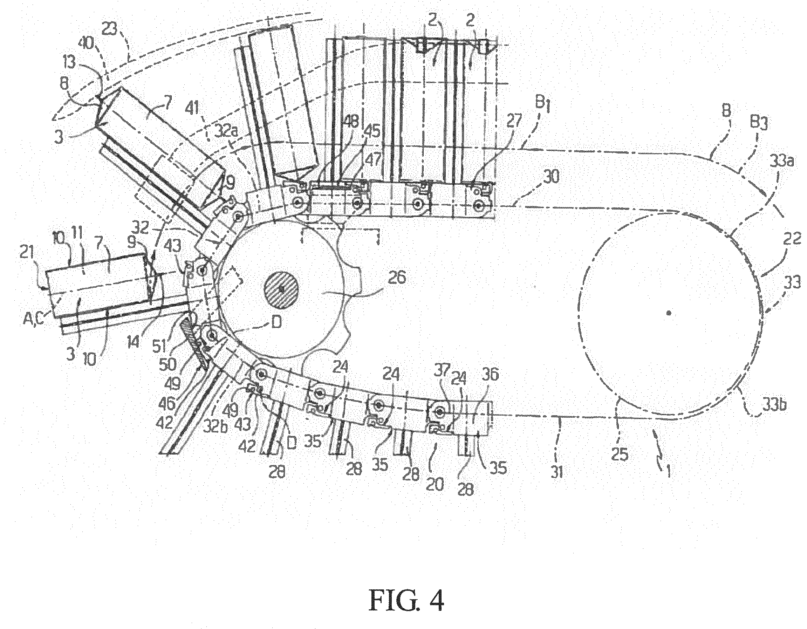

FIG. 4 is a schematic view of a chain conveyor formed of the chain links hinged of FIG. 3.
FIG. 5 is a schematic view of a first chain link for a chain conveyor according to the present invention.
FIG. 6 is a schematic view of a chain conveyor formed of the chain links hinged of FIG. 5.
FIG. 7 is a schematic view of a second chain link for a chain conveyor according to the present invention.
FIG. 8 is schematic view of a state of feeding the package from a provision platform.
FIG. 9 is schematic view of a state of an flap at the end of the package entering into a gap between chain links.
FIG. 10 is a schematic view of a state of folding the flap at the end of the package.
FIG. 11 is a schematic view of a state of folding the flap at the end of the package onto an end part.

### Detailed Description of the Invention

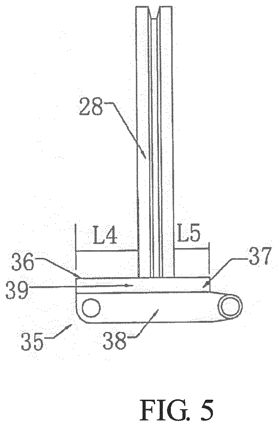

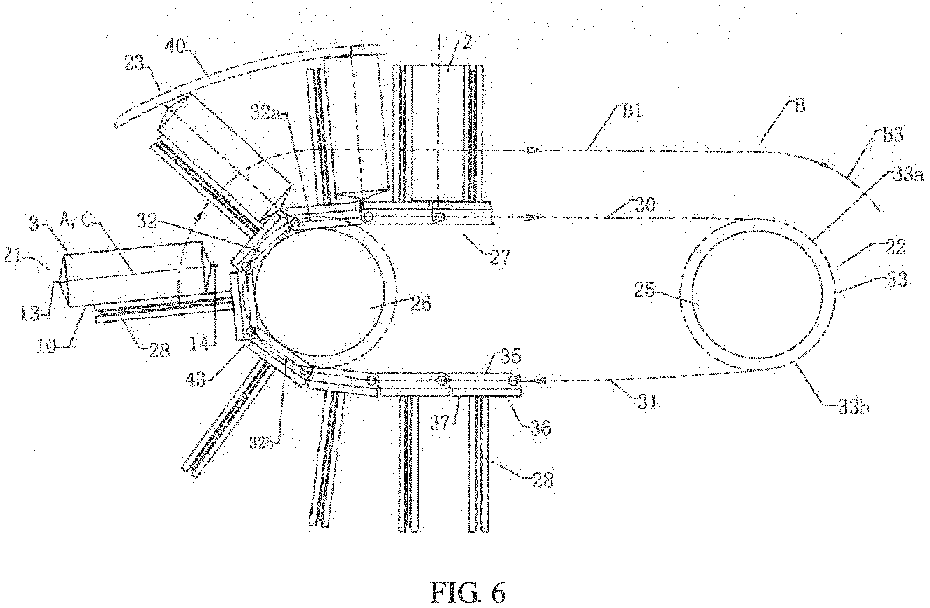

Referring to FIG. 5 and FIG. 6, a preferred embodiment of the present invention is an annular chain 27 formed of hinged chain links 35 for a chain conveyor, used for feeding a package 3 from a provision platform 21 to an output platform 22 (both shown schematically).continually along a substantially horizontal linear forming path B.

The chain conveyor comprises a drive gear 25, a driven gear 26 and the annular chain 27; and the annular chain 27 is an annular chain formed of multiple chain links 35 hinged together, and surrounds and meshes with the drive gear 25 and the driven gear 26.

The annular chain 27comprises a horizontal linear top branch 30, a bottom branch 31 substantially parallel to the top branch 30, and two bent C-shaped parts 32 and 33 located at the two ends of the top branch 30 and the bottom branch 31 respectively, and configured to allow a concave surface thereof facing the top branch 30 and the bottom branch 31. The chain links on the top branch 30 and the bottom branch 31 are hinged to form the annular chain. The middle parts of the C-shaped parts 32 and 33 define the provision platform 21 and the output platform 22 respectively.

The path B comprises a linear main part B1 defined by the top branch 30 of the annular chain 27, and a corresponding provision end B2 and an output end B3 defined by relative tops 32a and 33a of the C-shaped parts 32 and 33, the tops 32a and 33a extending between the relative provision platform 21 and output platform 22 and the top branch 30. The top 32a of the C-shaped part 32, the top branch 30 and the top 33a of the C-shaped part 33 define a conveying part of the annular chain 27 to feed the package 3 from the provision platform 21 to the output platform 22, while the remaining part 32b of the C-shaped part 32, the bottom branch 31 and the remaining part 33b of the C-shaped part 33 define a returning part of the annular chain 27 to allow the chain link 35 to be returned from the output platform 22 to the provision platform 21, so that the annular chain 27 operates circularly to constantly feed the package 3 from the provision platform 21 to the output platform 22. The flap at the end 14 at the bottom end of the package 3 is folded onto the end part 9, and the flap at the end 13 at the top end of the package 3 is folded onto the end part 8 under the effect of the guiding member 40 of the folding device 23.

The chain link 35 comprises a hinge part 38 for hinging and a support part 39 fastened onto the hinge part 38 for supporting the package 3. The outside surface of the support part 39 is a flat rectangular surface that forms a support surface for clamping and pushing the package 3. The blade 28 is used for clamping the planar rectangular walls 10 of the package 3 and pushing the package 3, so as to feed the package along the path B. At the top branch 30 in the straight line segment, the distance between the blades 28 of two neighboring chain links 35 equals to the width of the package 3 L (the distance between the planar rectangular walls 10 of the package 3 as shown in FIG. 2).

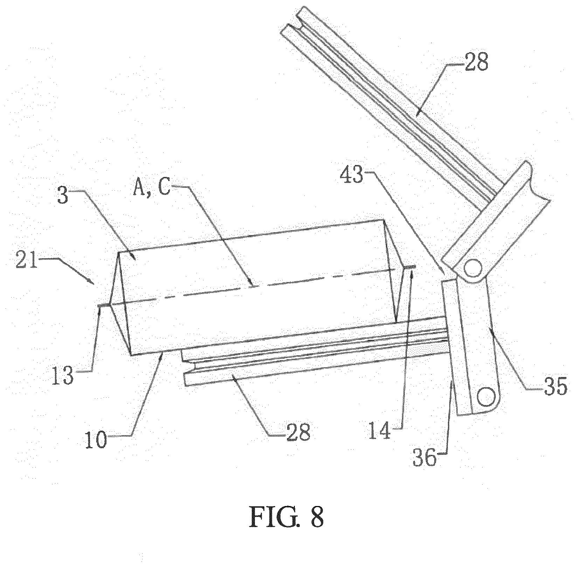

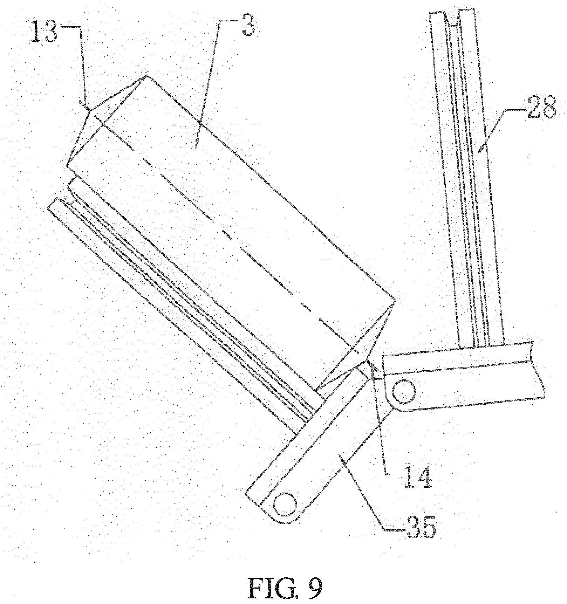

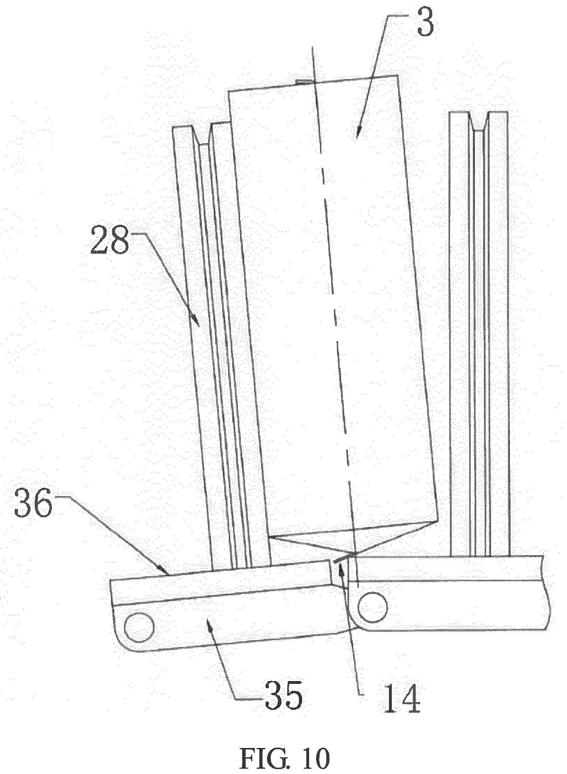

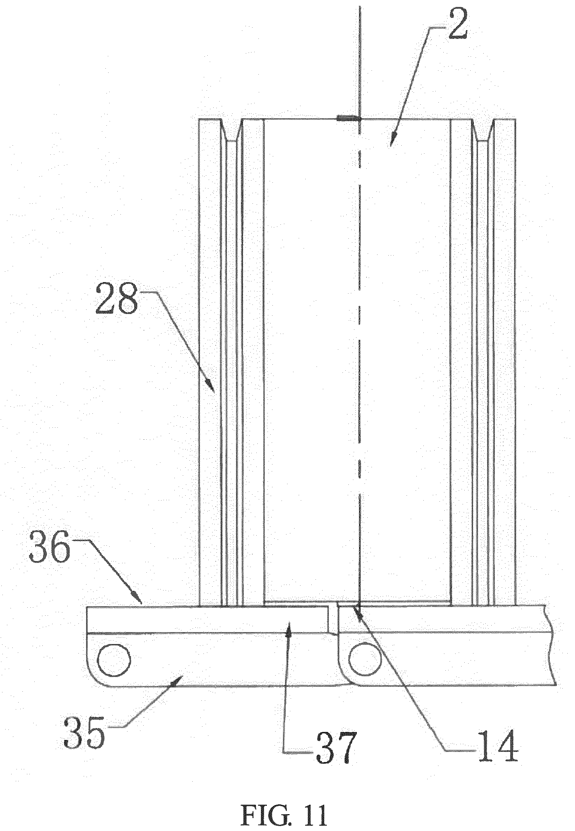

The blade 28 divides the support part 39 into a rectangular front support part 37 and a rear support part 36 for supporting the package 3. The front support part 37 refers to a location of the same chain link 35 upstream (front of) the traveling direction of the annular chain 27 conveying the package, while the rear support part 36 refers to a location of the same chain link 35 downstream (back of) the traveling direction of the annular chain 27 conveying the package. The front end surface of front support part 37 is parallel to the rear end surface of the rear support part 36, and the support surface of the rear support part 36 and the support surface of the front support part 37 are in a same plane. The support surface of the rear support part 36 is perpendicular to the rear end surface thereof and they are in arc transition or slope transition to form a guiding surface for folding the flap at the end 14, the height of the rear end surface equaling to or being slightly larger than the height H of the flap at the end 14. The front support part 37 and the rear support part 36 have different lengths along the path B: the length of the support surface of the front support part 37 L5 is slightly smaller than the distance between the flap at the end 14 and the rear side surface of the package3 L1, so that the flap at the end 14 can enter into a gap 43 between two neighboring chain links 35 when the package 3 is fed from the provision platform 21; accordingly, the length of the support surface of the rear support part 36 L4 equaling to or being slightly larger than the sum of the height H of the flap at the end 14 and the distance between the flap at the end 14 and the front side surface of the package 3 L2. With such a structure of different lengths, since at the top 32a of the C-shaped part 32 corresponding to the provision platform 21 (as shown in FIG. 8-11), there is a gap 43 between the two support parts 39 (the front support part 37 and the rear support part 36) of the annular chain 27, after the package 3 is fed from the provision platform 21, the package 3 is supported by the blade 28 of the next chain link 35 and the flap at the end 14 thereof can enter into the gap 43, during the movement through the chain link 35 from the C-shaped part 32 to the linear top branch 30, the blade 28 of the next chain link 35 pushes the package 3 closer to the blade 28 of the previous chain link 35, the gap 43 thus gradually becomes narrower; and meanwhile, since the flap at the end 14 is blocked by the rear end surface of the rear support part 36 of the previous chain link 35, the flap at the end 14 is gradually withdrawn from the gap 43 and is then folded backward onto the end part 9.

According to the structure of the chain conveyor, the blade 28 is vertically placed at the main part B1 of the path B, and substantially horizontally placed at the provision platform 21 and the output platform 22.

Each package 3 is placed on the conveyor, with the end part 9 contacting the conveying part of the annular chain 27, one side surface of the planar rectangular wall 10 being laid on the blade 28 of the next chain link 35, and the axis A parallel to the blade 28 but crisscross to the path B.

At the provision platform 21, each package 3 is fed to the chain conveyor in the feed direction C coaxial to the axis A of the package 3 and at the horizontal input position of the provision platform 21 where the end part 9 and the relative flap at the end are placed facing the conveying part of the annular chain 27. Similarly, each folded packaging container 2 is removed from the conveyor at a horizontal output position of the output platform 22.

In order to prevent the flap at the end 14 of the package 3 from squeeze damage, when in the straight line segment, there is a gap between the front end surface of the front support part 37 of the chain link 35 and the rear end surface of the rear support part 36 of the neighboring chain link 35, the width of the gap equaling to or being larger than the thickness of the flap at the end14, the depth of the gap equaling to or being slightly larger than the height of the flap at the end 14.

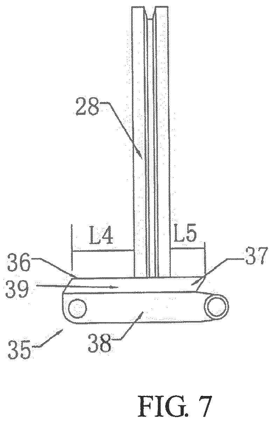

As another embodiment of the present invention, it is different from the above embodiments in that: as shown in FIG. 7, the rear end surface of the rear support part 36 tilts towards a direction away from the blade 28 to form a guiding surface for folding the flap at the end 14, and the rear end surface tilts in such a way that the angle formed between the support surface of the rear support part 36 and the rear end surface thereof is 90°-135°, and the projection height of the rear end surface of the rear support part 36 perpendicular to the support surface thereof equals to or is slightly larger than the height H of the flap at the end 14 so that the flap at the end 14 can be fully accommodated within the gap 43.

Certainly, the purpose of the present invention may also be realized if an acute angle is formed between the support surface of the rear support part 36 and the rear end surface thereof.

## Claims

1. A chain link (35) for a chain conveyor, comprising a hinge part (38) for hinging and a support part (39) fastened onto the hinge part (38) for supporting a package (3), the support part (39) being fastened with a blade (28) for clamping and pushing the package (3), the blade (28) dividing the support part (39) into a rectangular front support part (37) and a rear support part (36), and being able to be hinged to form an annular chain (27) of multiple chain links (35), with a distance between the blades (28) of two neighboring chain links (35) in a straight line segment equaling to a width (L) of the package (3) **characterized in that** the length (L5) of the support surface of the front support part (37) is slightly smaller than the distance (L1) between a flap at an end (14) and a rear side surface of the package (3) L1, so that, when the package (3) is fed to a C-shaped part (32) of the annular chain (27), the flap at the end (14) thereof enters into a gap (43) between two neighboring chain links (35); and a rear end surface of the rear support part (36) forms a guiding surface for guiding the folding of the flap at the end (14), said folding occurring during the movement of the chain link (35) from the C-shaped part (32) to a linear top branch (30) of the annular chain (27), when the tip of the flap at the end (14) is blocked by the rear end surface of the rear support part (36) of the previous chain link (35), the flap at the end (14) is gradually withdrawn from the gap (43) and gradually folded backward onto a bottom end part (9) of the package (3).

2. The chain link for the chain conveyor of claim 1, **characterized in that** the length (L4) of the support surface of the rear support part (36) is slightly larger than the sum of height H of the flap at the end (14) and the distance (L2) between the flap at the end (14) and the front side surface of the package (3).

3. The chain link for the chain conveyor of claim 2, **characterized in that** the support surface and the rear end surface of the rear support part (36) are in arc transition or slope transition.

4. The chain link for the chain conveyor of claim 2, **characterized in that** the support surface of the rear support part (36) is perpendicular to the rear end surface thereof, the height of the rear end surface equals to or is slightly larger than height H of the flap at the end (14).

5. The chain link for the chain conveyor of claim 1, **characterized in that** the angle between the support surface of the rear support part (36) and the rear end surface thereof is 90°-135°.

6. The chain link for the chain conveyor of claim 5, **characterized in that** a projection height of the rear end surface of the rear support part (36) perpendicular to the support surface thereof equals to or is slightly larger than height H of the flap at the end (14).

7. The chain link for the chain conveyor of claim 1, **characterized in that** the support surface of the rear support part (36) and rear end surface thereof form an acute angle.

8. The chain link for the chain conveyor of any one of claims 1 to 7, **characterized in that** the front end surface of the front support part (37) is parallel to the rear end surface of the rear support part (36).

9. A chain conveyor, comprising the chain link of any one of claims 1 to 8.

10. A filling machine, comprising the chain conveyor of claim 9.

11. A method for folding a flap at the bottom end of a package, by means of the annular chain (27) formed of multiple chain links (35) according to any one of claims 1 to 8, the annular chain (27) comprising a horizontal linear top branch (30) and a bottom branch (31) and two bent C-shaped parts (32 and 33), the C-shaped parts (32 and 33) being located at two ends of the top branch (30) and the bottom branch (31) respectively, and the middle parts of the C-shaped parts (32 and 33) defining a provision platform (21) and an output platform (22) respectively, the method comprising the following steps:
A. the package (3) having a flap at the end (14) is fed from the provision platform (21), so that the flap at the end (14) enters into the gap (43) between two neighboring chain links (35);
B. the annular chain (27) is moved so that the blade (28) of the next chain link (35) pushes the package (3) to move towards the top branch (30), and so that;
C. a guiding member (40) on the C-shaped part (32) at the provision platform (21) flattens a top end part (8) of the package (3); and
D. the rear end surface of the rear support part (36) gradually guides the flap at the end (14) to be folded onto the end part (9) during the movement of the chain link (35) from the C-shaped part (32) to the linear top branch (30) of the annular chain (27), when the tip of the flap at the end (14) is blocked by the rear end surface of the rear support part (36) of the previous chain link (35), the flap at the end (14) is gradually withdrawn from the gap (43) and gradually folded backward onto the bottom end part (9).

## Patentansprüche

1. Ein Kettenglied(35) für Kettenförderer, enthält gelenkige Gelenkverbindung(38), Ein Stützteil (39) zum Abstützen des Verpackungskomponenten(3) auf der festen Gelenkverbindung(38); auf der Gelenkverbindung(38) ist eine Schaufel(28) zum Halten und Schieben des Verpackungskomponenten(3) befestigt; durch die Schaufel(28) ist Stützteil(39) in rechteckigen vorderen Stützteil(37) und hinteren Stützteil(36) getrennt; runde Gelenkkette(27) können durch mehrere Kettenglieder(35) gebildet werden, im geraden Abschnitt ist der Abstand zwischen der Schaufel(28) der zwei angrenzenden Kettenglieder(35) gleich die Breite(L) des Verpackungskomponenten(3); **dadurch gekennzeichnet, dass** die Länge(L5) der Stützfläche des genannten vorderen Stützteils(37) etwas kleiner als den Abstand(Ll) zwischen Endklappe(14) des genannten Verpackungskomponenten(3) und hinterer Seite des Verpackungskomponenten(3) ist, dadurch wird die genannte Endklappe(14) vom C-förmigen Teil(32) der genannten runden Gelenkkette(27) in den Zwischenraum(43) zwischen vorderem und hinterem Stützteil der zwei Kettenglieder(35) gefördert; die hintere Stirnfläche des genannten hinteren Stützteils(36) ist als faltbare Führungsfläche zum Führen der Endklappe(14) gebildet, dadurch kann die Endklappe(14) während der Bewegung vom C-förmigen Teil(32) nach geradem Oberteil-Zweig(30) der runden Gelenkkette(27) durch die hintere Stirnfläche des hinteren Stützteils(36) des letzten Kettengliedes(35) blockiert werden, dann wird sie langsam aus dem Zwischenraum(43) herauskommen und nach hinten falten zum Endteil(9) des Verpackungskomponenten(3).

2. Ein Kettenglied für Kettenförderer nach Patentanspruch 1, **dadurch gekennzeichnet, dass** die Länge(L4) der Stützfläche des genannten hinteren Stützteils(36) etwas größer als die Summe der Höhe H der genannten Endklappe(14) und des Abstandes L2 zwischen der Endklappe und Vorderseite des genannten Verpackungskomponenten(3).

3. Ein Kettenglied für Kettenförderer nach Patentanspruch 2, **dadurch gekennzeichnet, dass** zwischen der Stützfläche des genannten hinteren Stützteils(36) und hinterer Stirnfläche ein runder Übergang oder bogenförmiger Übergang gibt.

4. Ein Kettenglied für Kettenförderer nach Patentanspruch 2, **dadurch gekennzeichnet, dass** die Stützfläche des genannten hinteren Stützteils(36) senkrecht zur hinteren Stirnfläche ist, die Höhe der hinteren Stirnfläche ist gleich oder etwas größer als die Höhe H der genannten Endklappe(14).

5. Ein Kettenglied für Kettenförderer nach Patentanspruch 1, **dadurch gekennzeichnet, dass** der Winkel zwischen der Stützfläche des genannten hinteren Stützteils(36) und hinterer Stirnfläche 90°-135° ist.

6. Ein Kettenglied für Kettenförderer nach Patentanspruch 5, **dadurch gekennzeichnet, dass** die Projektionshöhe der hinteren Stirnfläche des genannten hinteren Stützteils(36) senkrecht zur Stützfläche gleich oder etwas größer als die Höhe H der genannten Endklappe(14) ist.

7. Ein Kettenglied für Kettenförderer nach Patentanspruch 1, **dadurch gekennzeichnet, dass** zwischen der Stützfläche des genannten hinteren Stützteils(36) und hinterer Stirnfläche ein spitzer Winkel gebildet ist.

8. Ein Kettenglied für Kettenförderer nach einem des Patentanspruchs 1-7, **dadurch gekennzeichnet, dass** die vordere Stirnfläche des genannten vorderen Stützteils(37) parallel zur hinteren Stirnfläche des genannten hinteren Stützteils(36) ist.

9. Ein Kettenförderer enthält genanntes Kettenglied nach einem des Patentanspruchs 1-8.

10. Eine Füllmaschine enthält genannten Kettenförderer nach Patentanspruch 9.

11. Ein Verfahren zum Falten der Endklappe am unteren Ende des Verpackungskomponenten, enthält runde Gelenkkette(27) nach einem der Patentansprüche 1-8, die durch mehrere Kettenglieder(35) gebildet ist, die runde Gelenkkette(27) enthält geraden Oberteil-Zweig(30), Unterteil-Zweig(31) sowie zwei gekrümmte C-förmige Teile(32, 33), C-förmige Teile(32, 33) liegen jeweils auf den zwei Seiten des Oberteil-Zweigs(30) und Unterteil-Zweigs(31); die Mitte der C-förmigen Teile(32, 33) beschränkt jeweils die Bereitstellungsplattform(21) und die Ausgangsplattform(22); das genannte Verfahren enthält die folgenden Schritte:
A. Die Verpackungskomponente(3) mit Endklappe(14) wird durch die Bereitstellungsplattform(21) gefördert, dann wird die Endklappe(14) in den Zwischenraum(43) der zwei angrenzenden Kettenglieder(35) getreten;
B. Drehen die runde Gelenkkette(27), dann wird die Schaufel(28) des letzten Kettengliedes(35) die Verpackungskomponente(3) zum Oberteil-Zweig(30) schieben, dadurch:
C. wird das Führungselement(40) oberhalb des C-förmigen Teils(32) in der Bereitstellungsplattform(21) das Ende(8) des Verpackungskomponenten(3) flach drücken;
D. Die Endklappe(14) wird durch die hintere Stirnfläche des hinteren Stützteils(36) geführt und langsam zum Endteil(9) gefaltet, dadurch kann die Endklappe(14) während der Bewegung vom C-förmigen Teil(32) nach geradem Oberteil-Zweig(30) der runden Gelenkkette(27) durch die hintere Stirnfläche des hinteren Stützteils(36) des letzten Kettengliedes(35) blockiert werden, dann wird sie langsam aus dem Zwischenraum(43) herauskommen und nach hinten falten zum Endteil(9).

## Revendications

1. Un type de chaînon de station (35) destiné au transporteur à chaîne, y compris une unité d'articulation (38), une unité de support (39) fixée au-dessus de l'unité d'articulation (38) et destinée à supporter la pièce d'emballage (3); au-dessus de l'unité de support (39) est fixée une aube (28) destinée à retenir et à pousser la pièce d'emballage (3); l'aube (28) divise l'unité de support (39) en deux parties rectangulaires: support avant (37) et support arrière (36); l'articulation de plusieurs chaînons de station (35) permet de former une chaîne articulée en boucle (27), au niveau de la partie rectiligne, la distance entre les aubes (28) de deux chaînons de station (35) adjacents est égale à la largeur (L) de la pièce d'emballage (3); ses caractéristiques sont les suivantes: la longueur(L5) de la face de support du support avant (37) est légèrement inférieure à la distance (L1) de l'ailette pliée d'extrémité (14) au flanc arrière de ladite pièce d'emballage (3), pour que l'ailette pliée d'extrémité (14) rentre dans le jeu (43) entre les supports avant et arrière de deux chaînons de station (35) en traversant la pièce en C (32) de la chaîne articulée en boucle (27); la face d'extrémité arrière dudit support arrière (36) constitue une face de guidage permettant de guider le pliage de l'ailette pliée d'extrémité (14), et donc au cours de son déplacement depuis la pièce en C (32) vers la branche supérieure (30) rectiligne de la chaîne articulée en boucle (27), l'ailette pliée d'extrémité (14) qui est bloquée par la face d'extrémité arrière du support arrière (36) du chaînon de station (35) précédent sera progressivement retirée du jeu (43) puis pliée vers l'arrière sur l'extrémité (9) de la pièce d'emballage (3).

2. Un type de chaînon de station destiné au transporteur à chaîne tel que précisé dans la revendication 1, dont la caractéristique est : la longueur (L4) de la face d'extrémité du support arrière (36) est légèrement supérieure à la somme de la hauteur (H) de l'ailette pliée d'extrémité (14) et de la distance (L2) entre l'ailette et le flanc avant de la pièce d'emballage (3).

3. Un type de chaînon de station destiné au transporteur à chaîne tel que précisé dans la revendication 2, dont la caractéristique est: la face de support et la face d'extrémité arrière du support arrière (36) sont reliées par une transition d'arc ou inclinée.

4. Un type de chaînon de station destiné au transporteur à chaîne tel que précisé dans la revendication 2, dont la caractéristique est : la face de support et la face d'extrémité arrière du support arrière (36) sont perpendiculaires, et la hauteur de la face d'extrémité arrière est égale ou légèrement supérieure à la hauteur H de l'ailette pliée d'extrémité (14).

5. Un type de chaînon de station destiné au transporteur à chaîne tel que précisé dans la revendication 1, dont la caractéristique est: la face de support et la face d'extrémité arrière du support arrière (36) forment un angle de 90°-135°.

6. Un type de chaînon de station destiné au transporteur à chaîne tel que précisé dans la revendication 5, dont la caractéristique est : la hauteur de projection de la face d'extrémité arrière qui est perpendiculaire à la face de support du support arrière (36) est égale ou légèrement supérieure à la hauteur H de l'ailette pliée d'extrémité (14).

7. Un type de chaînon de station destiné au transporteur à chaîne tel que précisé dans la revendication 1, dont la caractéristique est: la face de support et la face d'extrémité arrière du support arrière (36) forment un angle aigu.

8. Un type de chaînon de station destiné au transporteur à chaîne tel que précisé dans une quelconque des revendications 1-7, dont la caractéristique est: la face d'extrémité avant du support avant (37) est parallèle à la face d'extrémité arrière du support arrière (36).

9. Un type de transporteur à chaîne avec le chaînon de station précisé dans une quelconque des revendications 1-8.

10. Une machine de remplissage avec le transporteur à chaîne précisé dans la revendication 9.

11. Une méthode de pliage de l'ailette pliée d'extrémité en partie basse de la pièce d'emballage, y compris la chaîne articulée en boucle (27) constituée des chaînons de station (35) articulés et citée dans une quelconque des revendications 1-8, cette chaîne articulée en boucle (27) comprend une branche supérieure rectiligne et horizontale (30), une branche inférieure (31) ainsi que deux pièces courbées en C (32 et 33), les deux pièces en C (32 et 33) se trouvent respectivement aux extrémités des branches supérieure(30) et inférieure (31); les deux pièces en C (32 et 33) calent au milieu la plate-forme d'alimentation (21) et la plate-forme de sortie (22); ladite méthode est composée des étapes suivantes:
A. Introduire la pièce d'emballage (3) avec ailette pliée d'extrémité (14) au niveau de la plate-forme d'alimentation (21), faire en sorte que l'ailette pliée d'extrémité (14) rentre dans le jeu (43) entre deux chaînons de station (35) adjacents;
B. Tourner la chaîne articulée en boucle (27) pour que l'aube (28) du chaînon de station (35) suivant pousse la pièce d'emballage (3) vers la branche supérieure (30), comme ça:
C. La pièce de guidage (40) au-dessus de la pièce en C (32) au niveau de la plate-forme d'alimentation (21) aplatit l'extrémité (8) de la pièce d'emballage (3);
D. La face d'extrémité arrière du support arrière (36) guide l'ailette pliée d'extrémité (14) pour qu'elle soit au fur et à mesure pliée sur l'extrémité (9), au cours du déplacement de la pièce en C (32) vers la branche supérieure (30) rectiligne de la chaîne articulée en boucle (27), ladite ailette pliée d'extrémité (14) qui est bloquée par la face d'extrémité arrière du support arrière (36) du chaînon de station (35) précédent sera progressivement retirée du jeu (43) et pliée vers l'arrière sur l'extrémité (9).
